# EUROPÄISCHE PATENTSCHRIFT

(11) **EP 3 460 299 B1**
(45) Veröffentlichungstag und Bekanntmachung des Hinweises auf die Patenterteilung: **22.11.2023**
(21) Anmeldenummer: 18195378.7
(22) Anmeldetag: 19.09.2018
(51) Int. Cl.: F16K 23/00

(54) **ANORDNUNG MIT EINER VENTILEINHEIT, EINER RÜCKSAUGEINHEIT UND EINEM VENTILKÖRPER**
ARRANGEMENT COMPRISING A VALVE UNIT, AN EXTRACTION UNIT AND A VALVE BODY
DISPOSITIF DOTÉ D'UNE UNITÉ DE SOUPAPE, D'UNE UNITÉ DE REFOULEMENT ET D'UN CORPS DE SOUPAPE

(30) Priorität: 22.09.2017 DE 102017122006
(43) Veröffentlichungstag der Anmeldung: 27.03.2019
(73) Patentinhaber: GEMÜ Gebr. Müller Apparatebau GmbH & Co. Kommanditgesellschaft, 74653 Ingelfingen (DE)
(72) Erfinder: LÖBER, Michael, 74653 Ingelfingen (DE); HAIDT, Harald, 74613 Öhringen (DE)
(74) Vertreter: DREISS Patentanwälte PartG mbB

(56) Entgegenhaltungen:
- DE-B4-102004 032 273
- US-A- 5 971 296
- US-B1- 6 332 924

## Beschreibung

Die Erfindung betrifft eine Anordnung mit einer Ventileinheit, einer Rücksaugeinheit und einem Ventilkörper.

Rücksaugventile sind allgemein bekannt und sind dazu ausgebildet eine festgelegte Menge eines Prozessfluids anzusaugen. Rücksaugventile werden zum Beispiel bei der Herstellung von Halbleiterwafern eingesetzt, um, wenn der Strom des Prozessfluid unterbrochen werden soll, den Austritt von geringer Menge an Prozessfluid beispielsweise einer Beschichtungsflüssigkeit von einem Zufuhranschluss zu verhindern. Beispielhaft wird auf die DE 10 2004 032 273 B4, die US 6,332,924 B1 und die US 5,971,296 A verwiesen.

Ausgehend davon könnte man die der Erfindung zugrunde liegende Aufgabe darin sehen, eine Anordnung bereitzustellen, welche den konstruktiven Aufwand zur Realisierung einer Rücksaugfunktion vereinfacht.

Dass der Erfindung zugrunde liegende Problem wird durch eine Anordnung nach dem Anspruch 1 gelöst. Weitere vorteilhafte Ausführungsformen finden sich in den Unteransprüchen und in der nachfolgenden Beschreibung von Ausführungsbeispielen.

Es wird eine Anordnung mit einer Ventileinheit, einer Rücksaugeinheit und einem Ventilkörper vorgeschlagen. Der Ventilkörper umfasst einen ersten Kanalabschnitt, welcher in eine erste Kammer mit einem Ventilsitz führt. Der Ventilkörper umfasst einen zweiten Kanalabschnitt, welcher die erste Kammer mit einer zweiten Kammer verbindet. Die zweite Kammer ist als zylindrische Bohrung ausgebildet. Der Ventilkörper umfasst einen dritten Kanalabschnitt, welcher von der zweiten Kammer wegführt. Die Ventileinheit umfasst ein erstes Plug-Diaphragm, wobei das erste Plug-Diaphragm, bei dessen Aufdrücken auf den Ventilsitz der ersten Kammer, eine Verbindung zwischen dem ersten Kanalabschnitt und dem zweiten Kanalabschnitt schließt. Die Rücksaugeinheit umfasst ein zweites Plug-Diaphragm, wobei das zweite Plug-Diaphragm bei dessen Zurückziehen innerhalb der zweiten Kammer ein in dem dritten Kanalabschnitt befindliches Prozessfluid in Richtung der zweiten Kammer zurücksaugt, wenn die Verbindung zwischen dem ersten Kanalabschnitt und dem zweiten Kanalabschnitt geschlossen ist.

Vorteilhaft wird eine Anordnung vorgeschlagen, welche die Funktionen des Verschließens eines Fluidkanals und des Rücksaugens konstruktiv voneinander entkoppelt. Durch diese konstruktive Entkopplung wird es darüber hinaus ermöglicht, standardisierte gleiche oder teilweise gleichartige Bauteile in Form der Plug-Diaphragm und der Antriebe für die Ventileinheit und die Rücksaugeinheit vorzusehen. Der Kundennutzen besteht darin, dass Bauteile für unterschiedliche Funktionen verwendet werden können.

Das erste und das zweite Plug-Diaphragm sind baugleich. Derselbe Typ von Plug-Diaphragm kann damit für die Ventilfunktion und die Rücksaugfunktion verwendet werden, was sich sowohl herstellerseitig als auch kundenseitig vorteilhaft auswirkt. Beispielsweise entfällt eine Vorhaltung von separaten Rücksaug- Plug-Diaphragm und Absperrelementen.

Das erste und zweite Plug-Diaphragm umfasst jeweils einen Klemmabschnitt, einen Membranabschnitt und einen gegenüber dem Membranabschnitt vorspringenden Abschnitt umfasst, wobei der vorspringende Abschnitt zu einer nicht medienberührten Seite einen Befestigungsabschnitt und auf einer gegenüberliegenden Seite des Befestigungsabschnitts einen Bereich zur Medienberührung umfasst. Der vorspringende Abschnitt ermöglicht ein Zusammenwirken mit einem Ventilsitz. Auf der anderen Seite ermöglicht der Membranabschnitt eine große axiale Bewegung, um für die Rücksaugfunktion ein entsprechendes Rücksaugvolumen bereitzustellen.

Eine vorteilhafte Ausführungsform zeichnet sich dadurch aus, dass der Ventilkörper einen der ersten Kammer zugeordneten ersten Anschlussbereich und einen der zweiten Kammer zugeordneten zweiten Anschlussbereich umfasst, und wobei der erste Anschlussbereich und der zweite Anschlussbereich gleich ausgebildet sind. Folglich können gleiche oder gleichartige Antriebe an den Ventilkörper angebracht werden.

Eine vorteilhafte Ausführungsform zeichnet sich dadurch aus, dass der erste Antrieb der Ventileinheit und der zweite Antrieb der Rücksaugeinheit einen jeweiligen gleich ausgebildeten Anschlussbereich umfassen.

Eine vorteilhafte Ausführungsform zeichnet sich dadurch aus, dass die zweite Kammer keinen Ventilsitz zum Verschließen einer Verbindung zwischen dem zweiten und dem dritten Kanalabschnitt umfasst.

Eine vorteilhafte Ausführungsform zeichnet sich dadurch aus, dass das zweite Plug-Diaphragm und die zweite Kammer in jeder Betriebsposition des zweiten Plug-Diaphragm einen ersten Strömungsquerschnitt freigeben, welcher gleich oder größer als ein zweiter Strömungsquerschnitt des zweiten Kanalabschnitts, und welcher gleich oder größer als ein dritter Strömungsquerschnitt des dritten Kanalabschnitts ist. Durch diese Ausbildung des Strömungsquerschnitts im Bereich der zweiten Kammer wird vorteilhaft erreicht, dass auf der einen Seite der Fluidstrom möglichst wenig beeinflusst wird und auf der anderen Seite ein Rücksaugvolumen bereitgestellt wird.

Weitere Vorteile und Merkmale der Erfindung finden sich ferner in der nachfolgenden Beschreibung von Ausführungsbeispielen und in der Zeichnung. In der Zeichnung zeigen:
- Figur 1: eine schematische perspektivische Ansicht einer Anordnung;
- Figur 2: einen schematischen Schnitt der Anordnung; und
- Figur 3: ein schematisches Ablaufdiagramm.

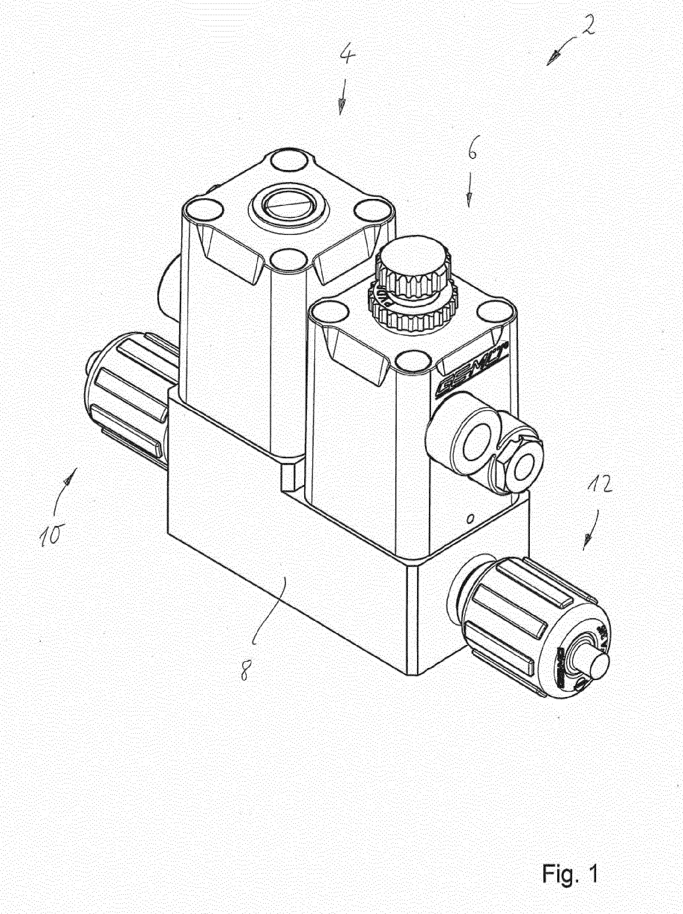

Figur 1 zeigt eine schematische perspektivische Ansicht einer Anordnung 2. Die Anordnung 2 umfasst eine Ventileinheit 4, eine Rücksaugeinheit 6 und einen Ventilkörper 8. Der Ventilkörper 8 umfasst einen Eingang 10 und einen Ausgang 12.

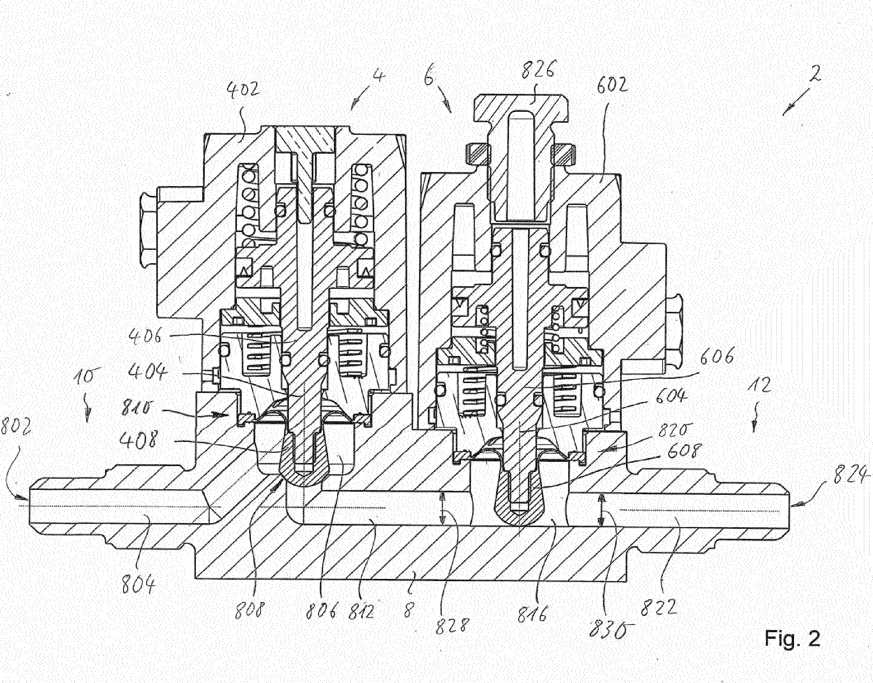

Figur 2 zeigt einen schematischen Schnitt der Anordnung 2. Der Ventilkörper 8 umfasst ausgehend von einer Eingangsöffnung 802 des Eingangs 10 einen ersten Kanalabschnitt 804, welcher in eine erste Kammer 806 mit einem Ventilsitz 808 führt. Die erste Kammer 806 mündet in einen ersten Anschlussbereich 810. Ein zweiter Kanalabschnitt 812 verbindet die erste Kammer 806 mit einer zweiten Kammer 816. Die zweite Kammer 816 mündet in einen zweiten Anschlussbereich 820. Ein dritter Kanalabschnitt 822 verbindet die zweite Kammer 816 mit einer Ausgangsöffnung 824 des Ausgangs 12. Durch die Ausführung der beiden Kammern 806 und 816 in dem gemeinsamen Ventilkörper 8 wird vorteilhaft der zweite Kanalabschnitt 812 gegenüber einer separaten Ausführung mit zwei Ventilkörpern verkürzt. Der erste Anschlussbereich 810 und der zweite Anschlussbereich 820 sind gleich ausgebildet, um so einen standardmäßigen Anschlussbereich für die Antriebe 402 und 602 bereitzustellen. Folglich umfassen die Ventileinheit 4 und die Rücksaugeinheit 6 einen jeweiligen zu den Anschlussbereichen 810 und 820 korrespondierenden Anschlussbereich.

Die Ventileinheit 4 umfasst einen an dem ersten Anschlussbereich 810 angeordneten ersten Antrieb 402 mit einer entlang einer ersten Zustellachse 404 bewegbaren ersten Spindel 406. Der Antrieb 402 ist vorliegend als pneumatischer Antrieb ausgebildet. Ein erstes Stellelement 408 ist mit der ersten Spindel 406 verbunden und in der ersten Kammer 806 angeordnet. Durch die Ansteuerung des Antriebs 402 wird die Spindel 406 auf den Ventilsitz 808 zu bewegt. Durch ein Andrücken des Stellelements 408 an den Ventilsitz 808 wird die Verbindung zwischen dem ersten Kanalabschnitt 804 und dem zweiten Kanalabschnitt 812 getrennt.

Die Rücksaugeinheit 6 umfasst einen an dem zweiten Anschlussbereich 820 angeordneten zweiten Antrieb 602 mit einer entlang einer zweiten Zustellachse 604 bewegbaren zweiten Spindel 606. Der Antrieb 602 ist vorliegend als pneumatischer Antrieb ausgebildet. Ein zweites Stellelement 608 ist mit der zweiten Spindel 606 verbunden und in der zweiten Kammer 816 angeordnet. Die zweite Kammer 816 umfasst keinen Ventilsitz und ist somit nicht dazu ausgebildet, um eine Verbindung zwischen den Kanalabschnitten 812 und 822 zu verschließen. Die zweite Kammer 816 ist vorliegend als zylindrische Bohrung ausgebildet, wobei eine Längsachse der zylindrischen Bohrung lotrecht zu Längsachsen der Kanalabschnitte 812 und 822 verläuft, und wobei die zylindrische Bohrung einen größeren Durchmesser aufweist als ein Durchmesser der Kanalabschnitte 812 und 822. Form und Volumen der zweiten Kammer 816 sind so auf das Stellelement 608 abgestimmt, dass in jeder Betriebsposition des zweiten Stellelements 608 ein Strömungsquerschnitt freigegeben wird, welcher zumindest gleich, bevorzugt aber größer als ein jeweiliger Strömungsquerschnitt 828 des zweiten Kanalabschnitts 812 oder größer als ein Strömungsquerschnitt 830 des dritten Kanalabschnitts 822 ist.

Bei getrennter Verbindung zwischen den Kanalabschnitten 804 und 806 wird das Stellelement 608 aus der in Figur 2 gezeigten Position entlang der Zustellachse 604 zurückgezogen und saugt durch die erfolgende Volumenvergrößerung eine Menge von Prozessfluid aus dem dritten Kanalabschnitt 822 an. Die Menge des angesaugten Prozessfluids ist mittels einer in das Antriebsgehäuse des Antriebs 602 eindrehbaren Hubbegrenzung 826 einstellbar. Die Hubbegrenzung 826 ist vorliegend manuell ausgeführt, kann aber selbstverständlich auch mit einem Stellmotor versehen werden.

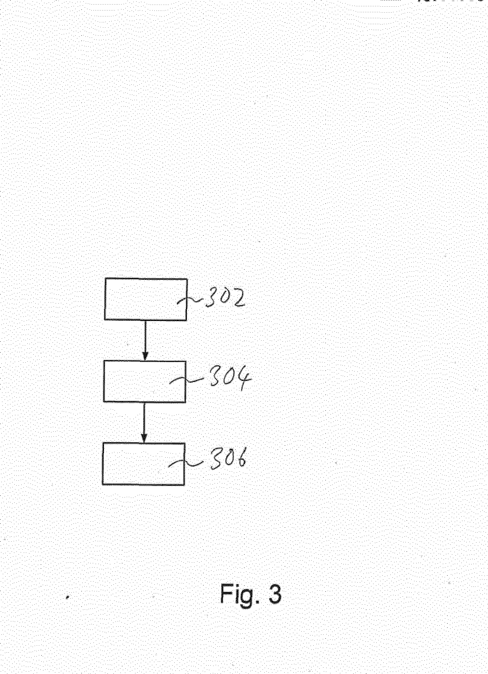

Das erste und zweite Stellelement 408 und 608 sind auch als Plug-Diaphragm bezeichenbar und umfassen einen radial äußeren Klemmabschnitt, welcher im jeweiligen Anschlussbereich 810, 820 zwischen dem jeweiligen Antrieb 402, 602 und dem Ventilkörper 8 verklemmt ist. An den radial äußeren Klemmabschnitt schließt sich radial nach innen ein Membranabschnitt an. An den Membranabschnitt schließt sich ein zentraler, vorspringender Abschnitt an. Der zentrale, vorspringende Abschnitt weist zu einer nicht medienberührten Seite einen Befestigungsabschnitt auf, in welchen die jeweilige Spindel 406, 606 eindrehbar ist. Auf der gegenüberliegenden Seite des Befestigungsabschnitts umfasst das jeweilige Stellelement 408 und 608 einen Bereich zur Medienberührung und insbesondere zur Kontaktierung eines Ventilsitzes. Das erste und das zweite Stellelement 408, 608 sind baugleich. Figur 3 zeigt ein schematisches Ablaufdiagramm. In einem ersten Schritt 302 ist das erste Stellelement nicht auf den Ventilsitz gedrückt und der erste und der zweite Kanalabschnitt sind fluidführend miteinander verbunden. Mithin führt ein Zuführen einer ersten Menge von Prozessfluid am Eingang der Anordnung zum Austritt einer der ersten Menge entsprechenden zweiten Menge von Prozessfluid am Ausgang der Anordnung. In einem Schritt 304 wird das erste Stellelement auf den Ventilsitz gedrückt und verschließt damit die Verbindung zwischen dem ersten und dem zweiten Kanalabschnitt. In einem Schritt 306 wird das zweite Stellelement in Richtung des zugeordneten Antriebs zurückgezogen, um in dem dritten Kanalabschnitt befindliches Prozessfluid anzusaugen.

## Patentansprüche

1. Eine Anordnung (2) mit einer Ventileinheit (4), einer Rücksaugeinheit (6) und einem Ventilkörper (8),
- wobei der Ventilkörper (8) einen ersten Kanalabschnitt (804) umfasst, welcher in eine erste Kammer (806) mit einem Ventilsitz (808) führt;
- wobei der Ventilkörper (8) einen zweiten Kanalabschnitt (812) umfasst, welcher die erste Kammer (806) mit einer zweiten Kammer (816) verbindet, wobei die zweite Kammer (816) als zylindrische Bohrung ausgebildet ist, und wobei eine Längsachse der zylindrischen Bohrung lotrecht zur Längsachsen der Kanalabschnitte (804,812) verläuft; und wobei- der Ventilkörper (8) einen dritten Kanalabschnitt (822) umfasst, welcher von der zweiten Kammer (816) wegführt;
- die Ventileinheit (4) ein erstes Plug-Diaphragm (408) umfasst, wobei das erste Plug-Diaphragm, bei dessen Aufdrücken auf den Ventilsitz (808) der ersten Kammer (806), eine Verbindung zwischen dem ersten Kanalabschnitt (804) und dem zweiten Kanalabschnitt (812) schließt; und
- die Rücksaugeinheit (6) ein zweites Plug-Diaphragm (608) umfasst, wobei das zweite Plug-Diaphragm (608) bei dessen Zurückziehen innerhalb der zweiten Kammer (816) ein in dem dritten Kanalabschnitt (822) befindliches Fluid in Richtung der zweiten Kammer (816) zurücksaugt, wenn die Verbindung zwischen dem ersten Kanalabschnitt (804) und dem zweiten Kanalabschnitt (812) geschlossen ist, **dadurch gekennzeichnet, dass** das erste und das zweite Plug-Diaphragm (408, 608) baugleich sind, und wobei das erste und zweite Plug-Diaphragm (408, 608) jeweils einen Klemmabschnitt, einen Membranabschnitt und einen gegenüber dem Membranabschnitt vorspringenden Abschnitt umfasst, wobei der zentrale vorspringende Abschnitt zu einer nicht medienberührten Seite einen Befestigungsabschnitt und auf einer gegenüberliegenden Seite des Befestigungsabschnitts einen Bereich zur Medienberührung umfasst.

2. Die Anordnung (2) nach einem der vorstehenden Ansprüche, wobei der Ventilkörper (8) einen der ersten Kammer (806) zugeordneten ersten Anschlussbereich (810) und einen der zweiten Kammer (816) zugeordneten zweiten Anschlussbereich (820) umfasst, und wobei der erste Anschlussbereich (810) und der zweite Anschlussbereich (820) gleich ausgebildet sind.

3. Die Anordnung (2) nach dem Anspruch 2, wobei der erste Antrieb (402) der Ventileinheit (4) und der zweite Antrieb (602) der Rücksaugeinheit (6) einen jeweiligen gleich ausgebildeten Anschlussbereich umfassen.

4. Die Anordnung (2) nach einem der vorstehenden Ansprüche, wobei die zweite Kammer (816) keinen Ventilsitz zum Verschließen einer Verbindung zwischen dem zweiten und dem dritten Kanalabschnitt (812, 822) umfasst.

5. Die Anordnung (2) nach einem der vorstehenden Ansprüche, wobei das zweite Plug-Diaphragm (608) und die zweite Kammer (816) in jeder Betriebsposition des zweiten Plug-Diaphragm (608) einen ersten Strömungsquerschnitt freigeben, welcher gleich oder größer als ein zweiter Strömungsquerschnitt des zweiten Kanalabschnitts (812), und welcher gleich oder größer als ein dritter Strömungsquerschnitt des dritten Kanalabschnitts (822) ist.

## Claims

1. An assembly (2) comprising a valve uni t (4), a back suction unit (6) and a valve body (8),
- wherein the valve body (8) comprises a first channel section (804) leading into a first chamber (806) with a valve seat (808);
- wherein the valve body (8) comprises a second channel section (812) connecting the first chamber (806) to a second chamber (816), wherein the second chamber (816) is formed as a cylindrical bore, and wherein a longitudinal axis of the cylindrical bore is perpendicular to longitudinal axes of the channel sections (804, 812);and wherein the valve body (8) comprises a third channel section (822) leading away from the second chamber (816);
- the valve unit (4) comprises a first plug diaphragm (408), wherein the first plug diaphragm (408), when pressed against the valve seat (808) of the first chamber (806), closes a connection between the first channel section (804) and the second channel section (12); and
- the back-suction unit (6) comprises a second plug diaphragm (608), wherein the second plug diaphragm (608), upon its retraction within the second chamber (816), sucks back a fluid located in the third channel section (822) towards the second chamber (816) when the connection between the first channel section (804) and the second channel section (812) is closed, **characterized in that** the first and the second plug diaphragm (408, 608) are identical in construction, and wherein the first and second plug diaphragms (408, 608) each comprise a clamping portion, a diaphragm portion, and a central projecting portion opposite the diaphragm portion, the central projecting portion comprising a mounting portion on a non-media-contacting side and a media-contacting region on an opposite side of the mounting portion.

2. The assembly (2) according to any one of the preceding claims, wherein the valve body (8) comprises a first port region (810) associated with the first chamber (806) and a second port region (820) associated with the second chamber (816), and wherein the first port region (810) and the second port region (820) are formed identically.

3. The assembly (2) according to claim 2, wherein the first actuator (402) of the valve unit (4) and the second actuator (602) of the backsuction unit (6) comprise a respective identically formed connection area.

4. The assembly (2) according to any one of the preceding claims, wherein the second chamber (816) does not comprise a valve seat for closing a connection between the second and third channel sections (812, 822).

5. The assembly (2) according to any one of the preceding claims, wherein the second plug diaphragm (608) and the second chamber (816) in any operating position of the second plug diaphragm (608) unblock a first flow cross-section which is equal to or greater than a second flow cross-section of the second channel section (812), and which is equal to or greater than a third flow cross-section of the third channel section (822) .

## Revendications

1. Ensemble (2) avec une unité de soupape (4), une unité d'aspiration en retour (6) et un corps de soupape (8),
- dans lequel le corps de soupape (8) comprend une première partie de canal (804), laquelle mène dans une première chambre (806) avec un siège de soupape (808) ;
- dans lequel le corps de soupape (8) comprend une deuxième partie de canal (812), laquelle relie la première chambre (806) à une deuxième chambre (816), dans lequel la deuxième chambre (816) est réalisée sous la forme d'un trou cylindrique, et dans lequel un axe longitudinal du trou cylindrique s'étend perpendiculairement aux axes longitudinaux des parties de canal (804, 812) ;
- et dans lequel le corps de soupape (8) comprend une troisième partie de canal (822), laquelle s'écarte de la deuxième chambre (816) ;
- l'unité de soupape (4) comprend un premier diaphragme à bouchon (408), dans lequel le premier diaphragme à bouchon, lors de la pression de celui-ci sur le siège de soupape (808) de la première chambre (806), ferme une liaison entre la première partie de canal (804) et la deuxième partie de canal (812) ; et
- l'unité d'aspiration en retour (6) comprend un deuxième diaphragme à bouchon (608), dans lequel le deuxième diaphragme à bouchon (608) lors du retrait de celui-ci à l'intérieur de la deuxième chambre aspire en retour un fluide se trouvant dans la troisième partie de canal (822) en direction de la deuxième chambre (816), lorsque la liaison entre la première partie de canal (804) et la deuxième partie de canal (812) est fermée, **caractérisé en ce que** le premier et le deuxième diaphragme à bouchon (408, 608) sont de structure identique, et dans lequel le premier et deuxième diaphragme à bouchon (408, 608) comprend respectivement une partie de serrage, une partie de membrane et une partie saillante par rapport à la partie de membrane, dans lequel la partie saillante centrale comprend vers un côté non en contact avec le milieu une partie de fixation et sur un côté opposé de la partie de fixation une zone pour le contact avec le milieu.

2. Ensemble (2) selon l'une quelconque des revendications précédentes, dans lequel le corps de soupape (8) comprend une première zone de raccordement (810) associée à la première chambre (806) et une deuxième zone de raccordement (820) associée à la deuxième chambre (816), et dans lequel la première zone de raccordement (810) et la deuxième zone de raccordement (820) sont réalisées de la même façon.

3. Ensemble (2) selon la revendication 2, dans lequel le premier entraînement (402) de l'unité de soupape (4) et le deuxième entraînement (602) de l'unité d'aspiration en retour (6) comprennent une zone de raccordement respective réalisée de la même façon.

4. Ensemble (2) selon l'une quelconque des revendications précédentes, dans lequel la deuxième chambre (816) ne comprend pas de siège de soupape pour la fermeture d'une liaison entre la deuxième et la troisième partie de canal (812, 822).

5. Ensemble (2) selon l'une quelconque des revendications précédentes, dans lequel le deuxième diaphragme à bouchon (608) et la deuxième chambre (816) dans chaque position de fonctionnement du deuxième diaphragme à bouchon (608) libèrent une première section transversale d'écoulement, laquelle est supérieure ou égale à une deuxième section transversale d'écoulement de la deuxième partie de canal (812), et laquelle est supérieure ou égale à une troisième section transversale d'écoulement de la troisième partie de canal (822).
